# EUROPÄISCHE PATENTSCHRIFT

(11) **EP 3 267 768 B1**
(45) Veröffentlichungstag und Bekanntmachung des Hinweises auf die Patenterteilung: **13.11.2019**
(21) Anmeldenummer: 17178149.5
(22) Anmeldetag: 27.06.2017
(51) Int. Cl.: H04N 5/225, H04N 5/232, H05B 33/08, H05B 37/02

(54) **BELEUCHTUNGSANORDNUNG FÜR DIE INDUSTRIELLE BILDVERARBEITUNG**
LIGHTING ARRANGEMENT FOR INDUSTRIAL IMAGE PROCESSING
SYSTÈME D'ÉCLAIRAGE POUR LE TRAITEMENT D'IMAGE INDUSTRIEL

(30) Priorität: 04.07.2016 AT 505932016
(43) Veröffentlichungstag der Anmeldung: 10.01.2018
(73) Patentinhaber: B&R Industrial Automation GmbH, 5142 Eggelsberg (AT)
(72) Erfinder: Huber, Matthias, 84568 Pleiskirchen (DE)
(74) Vertreter: Patentanwälte Pinter & Weiss OG

(56) Entgegenhaltungen:
- WO-A2-2009/011898
- US-A1- 2004 160 199
- US-A1- 2007 273 307

## Beschreibung

Die gegenständliche Erfindung betrifft eine Beleuchtungsanordnung für die industrielle Bildverarbeitung mit einer Beleuchtungssteuereinheit und zumindest einer Beleuchtungseinheit mit einer ersten Datenkommunikationsschnittstelle zum Anschließen eines Datenbusses, wobei die Beleuchtungssteuereinheit über den Datenbus mit der Beleuchtungseinheit verbunden ist und in der Beleuchtungseinheit ein Beleuchtungsmittel mit einer Anzahl von Lichtquellen angeordnet ist. Die Erfindung betrifft weiter ein Verfahren zum Steuern einer Beleuchtung einer industriellen Bildverarbeitung,
In der industriellen Bildverarbeitung wird ein Beleuchtungsbereich von einer Beleuchtung ausgeleuchtet und der ausgeleuchtete Beleuchtungsbereich wird von einer Bilderfassungseinheit, beispielsweise eine Kamera, erfasst und ausgewertet. Das Ergebnis der Auswertung kann auf vielfältige Weise verwendet werden und reicht von der bloßen Überwachung bis zum Steuern und Regeln eines Fertigungsprozesses. In der industriellen Bildverarbeitung kommt der Beleuchtung eine wichtige Aufgabe zu, da diese für eine möglichst konstante und definierte Ausleuchtung des Beleuchtungsbereichs sorgen muss, um eine zuverlässige Auswertung der erfassten Bilder sicherzustellen. Jede Lichtquelle, und insbesondere in heutigen Beleuchtungen oftmals eingesetzte LEDs, altern mit der Betriebszeit und in Abhängigkeit von der Art wie diese betrieben wird. Eine Beleuchtung für die industrielle Bildverarbeitung ist daher in der Regel regelbar, um eine konstante, definierte Beleuchtung zu ermöglichen. Dabei ist es in der Regel auch notwendig, die Beleuchtung an jede einzelne Anwendung der industriellen Bildverarbeitung gezielt anzupassen, was eine gewisse Flexibilität der Beleuchtung notwendig macht.

Die WO 2015/097476 A2 beschreibt beispielsweise ein Beleuchtungssystem für die industrielle Bildverarbeitung. Das Beleuchtungssystem besteht aus einer Beleuchtungseinheit mit Leuchtmitteln (LEDs), die von einer Steuereinheit gesteuert werden. In der Beleuchtungseinheit ist ein Speicher vorgesehen, in dem beleuchtungsrelevante Daten hinterlegt sind, die im laufenden Betrieb zum Teil aktualisiert werden und die von der Steuereinheit ausgelesen werden und bei der Steuerung der Leuchtmitteln berücksichtigt werden. Das Beleuchtungssystem ist damit ein in sich geschlossenes, autarkes System. Für eine Anpassung der Beleuchtung die über die Möglichkeiten des Beleuchtungssystems hinausgehen müssen entweder die Leuchtmittel im Beleuchtungssystem adaptiert werden, oder es müssen mehrere Beleuchtungssysteme eingesetzt werden. Im Falle mehrerer Beleuchtungssysteme ist es aber aufgrund der Geschlossenheit der Beleuchtungssysteme schwierig das Zusammenarbeiten bzw. das Zusammenwirken der Beleuchtungssysteme einzustellen oder zu kontrollieren.

Die WO 2009/011898 A2 offenbart ein Beleuchtungssystem für einen Reisebus mit einer Master-Einheit und einer serielle Anordnung von Beleuchtungseinheiten. Eine Beleuchtungseinheit weist einen Slave-Knoten und ein LED-Modul auf. Im Slave-Knoten sind ein Mikrocontroller, ein Spannungsregler und ein Stromregler angeordnet. Über einen ersten Command-Bus erhält der Mikrocontroller Steuerbefehle von der Master-Einheit oder einer davor angeordneten Beleuchtungseinheit über einen zweiten Command-Bus. Im LED-Modul sind mehrere LED's sowie ein Temperatursensor und ein optischer Sensor angeordnet. Die Spannungsversorgung erfolgt über eine Batterie. Das Beleuchtungssystem ist für eine Fahrzeuganwendung ausgelegt und deshalb nicht für den rauen Einsatz im industriellen Umfeld geeignet. Nachteilig ist zudem, dass die serielle Datenverbindung über den Mikrocontroller läuft, weshalb weiter von der Master-Einheit entfernte Beleuchtungseinheiten Sollwerte verzögert erhalten, wodurch keine echtzeitfähige Regelung der Beleuchtungsanordnung möglich ist.

Die US 2007/0273307 A1 offenbart ein Beleuchtungssystem zur Beleuchtung von Gebäuden. Über einen global controller können globale Steuersignale wie z.B. ein Zeitpläne für die Beleuchtung vorgegeben werden, Ein local controller koordiniert lokale Steuergrößen, wie z.B. Lichtschalter, Bewegungssensoren oder Lichtsensoren mit den globalen Steuergrößen. Für die industrielle Bildverarbeitung ist dieses System ungeeignet, da keine vorgegebenen Sollwerte der Beleuchtung genau eingeregelt werden können, sondern lediglich ein Ein-/Ausschalten oder Dimmen der Beleuchtung möglich ist.

Es ist eine Aufgabe der gegenständlichen Erfindung eine Beleuchtungsanordnung für die industrielle Bildverarbeitung und ein zugehöriges Steuerverfahren anzugeben, die eine hohe Flexibilität der Beleuchtung bei gleichzeitiger zuverlässiger Beleuchtung sowie eine schnelles Erreichen eines vorgegeben Sollwertes der Beleuchtung ermöglicht.

Diese Aufgabe wird erfindungsgemäß dadurch gelöst, dass die Beleuchtungssteuereinheit vorgesehen ist, einen Sollwert der Beleuchtung über den Datenbus an die Beleuchtungseinheit zu senden, dass in der Beleuchtungseinheit eine zweite Datenkommunikationsschnittstelle zum Anschließen des Datenbusses vorgesehen ist, die mit der ersten Datenkommunikationsschnittstelle direkt verbunden ist, um den Datenbus durchzuschleifen, dass in der Beleuchtungseinheit zumindest ein Messsensor zur Erfassung zumindest einer Zustandsgröße der Beleuchtungseinheit und/oder der Umgebung der Beleuchtungseinheit angeordnet ist, dass in der Beleuchtungseinheit eine Recheneinheit angeordnet ist, um die aus dem vorgegebenen Sollwert und dem aktuellen Wert der zumindest einen Zustandsgröße eine Stellgröße für zumindest eine Lichtquelle des Beleuchtungsmittels zu berechnen und dass in der Beleuchtungseinheit eine Leuchtensteuereinheit vorgesehen ist, um die zumindest eine Lichtquelle des Beleuchtungsmittels mit der berechneten Stellgröße anzusteuern. Das Vorsehen von einer ersten und zweiten Datenkommunikationsschnittstelle erlaubt die flexible Erweiterung der Beleuchtungsanordnung mit weiteren Beleuchtungseinheiten je nach Anforderung und Anwendung. Es können damit standardisierte Beleuchtungseinheiten verwendet werden, die je nach Bedarf kombiniert werden. Die Beleuchtungseinheiten arbeiten dabei autonom, indem diese erhaltene Sollwerte eigenständig und unabhängig voneinander und von der Beleuchtungssteuereinheit einregeln. Damit muss sich die Beleuchtungssteuereinheit auch nicht um eine allfällige Alterung oder sonstiger Veränderung (wie z.B. einem Anstieg der Temperatur) der Beleuchtungseinheit(en) kümmern, da die Beleuchtungseinheit die Vorgabe der Beleuchtungssteuereinheit umsetzen und damit selbsttätig solche Änderungen ausgleichen. Es kann damit auch eine zuverlässige Beleuchtung realisiert werden, die auch über einen langen Zeitraum ohne wesentliche Änderungen aufrechterhalten werden kann.

In einer vorteilhaften Ausgestaltung sind einzelne Lichtquellen zu Gruppen zusammengefasst, die von der Recheneinheit und der Leuchtensteuereinheit als Gruppe gesteuert werden. Das ermöglicht es beispielsweise auf einfache Weise Lichtquellen mit unterschiedlichen Lichtcharakteristiken, wie z.B. unterschiedliche Lichtspektren, zusammenzufassen und gemeinsam zu steuern. Die Gruppierung der Lichtquellen kann dabei auch konfigurierbar sein, beispielsweise in der Beleuchtungssteuereinheit und/oder der Beleuchtungseinheit selbst.

Für eine einfache Spannungsversorgung der Beleuchtungseinheit kann diese mit einem externen elektrischen Anschluss und/oder einem Datenbus mit Stromversorgung verbunden sein. Bei Verwendung eines Datenbusses mit Stromversorgung bedarf es keiner weiteren Verkabelung zur Spannungsversorgung, womit die Beleuchtungsanordnung vereinfacht werden kann.

Wenn eine Beleuchtungseinheit eine erfasste Zustandsgröße über den Datenbus an die Beleuchtungssteuereinheit sendet kann die Beleuchtungssteuereinheit die Funktion der Beleuchtungseinheit auf einfache Weise überwachen und auswerten. Beispielsweise kann die Einhaltung von Grenzwerten bestimmter Zustandsgrößen überwacht werden und rechtzeitig eine Handlung gesetzt werden, bevor eine Beleuchtungseinheit beschädigt wird. Das wird unterstützt, wenn der Beleuchtungseinheit eine eindeutige Kennung zugeordnet ist und die Beleuchtungseinheit eine erfasste Zustandsgröße mit der eindeutigen Kennung über den Datenbus an die Beleuchtungssteuereinheit sendet. Dadurch können Zustandsgrößen in der Beleuchtungssteuereinheit auf einfache Weise einer bestimmten Beleuchtungseinheit zugeordnet werden.

Um die Beleuchtungseinheit(en) einfach synchronisieren zu können, kann an der Beleuchtungseinheit ein mit der Recheneinheit verbundener Triggereingang vorgesehen sein, um der Recheneinheit ein Triggersignal zum Ein- und/oder Ausschalten des Beleuchtungsmittels, einer Lichtquelle oder eine Gruppe von Lichtquellen zuzuführen. Alternativ kann auch eine Triggernachricht über den Datenbus an eine Beleuchtungseinheit gesendet werden.

Wenn in der Beleuchtungseinheit eine Speichereinheit angeordnet ist, in der Betriebsdaten der Beleuchtungseinheit und/oder Zustandsgrößen gespeichert werden, werden nachträgliche Analysen des Betriebs einer Beleuchtungseinheit ermöglicht, z.B. um im Fehlerfall Rückschlüsse auf eine Fehlerursache zu erhalten.

Die serielle Verschaltung mehrerer Beleuchtungseinheiten über den Datenbus kann genutzt werden, indem eine Beleuchtungseinheit einen von der Beleuchtungssteuereinheit erhaltenen Sollwert der Beleuchtung per Daisy-Chain Verbindung weitergibt. Das ermöglicht einen besonders einfachen Betrieb der Beleuchtungseinheiten.

Die gewünschte Anordnung der Beleuchtungseinheiten im Raum zur Realisierung der Beleuchtungsaufgabe kann vereinfacht werden, wenn zumindest zwei Beleuchtungseinheit an einem starren oder verstellbaren Verbindungsteil angeordnet werden, wodurch auf einfache Weise eine definierte Lage zueinander eingestellt werden kann.

Durch die Verwendung eines Datenbusses zur Verbindung verschiedener Beleuchtungseinheiten kann die Beleuchtungsanordnung auch auf einfache Weise durch weitere Busgeräte ergänzt werden, indem diese zwischen zwei Beleuchtungseinheiten und/oder an die von der Beleuchtungssteuereinheit am weitesten entfernte Beleuchtungseinheit ein weiteres Busgerät in den Datenbus geschaltet werden. Das erlaubt die einfache Integration der gesamten Automatisierung, in die die industrielle Beleuchtung eingebunden ist. Auf diese Weise kann die industrielle Beleuchtung auch durch weitere Funktionalitäten, die von einem zusätzlichen Busgerät zur Verfügung gestellt wird, erweitert werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine erfindungsgemäße Beleuchtungsanordnung für die industrielle Bildverarbeitung,
Fig.2 einen vorteilhaften Aufbau einer Beleuchtungseinheit der Beleuchtungsanordnung und
Fig.3 die Erweiterung der Beleuchtungsanordnung durch weitere Busgeräte.

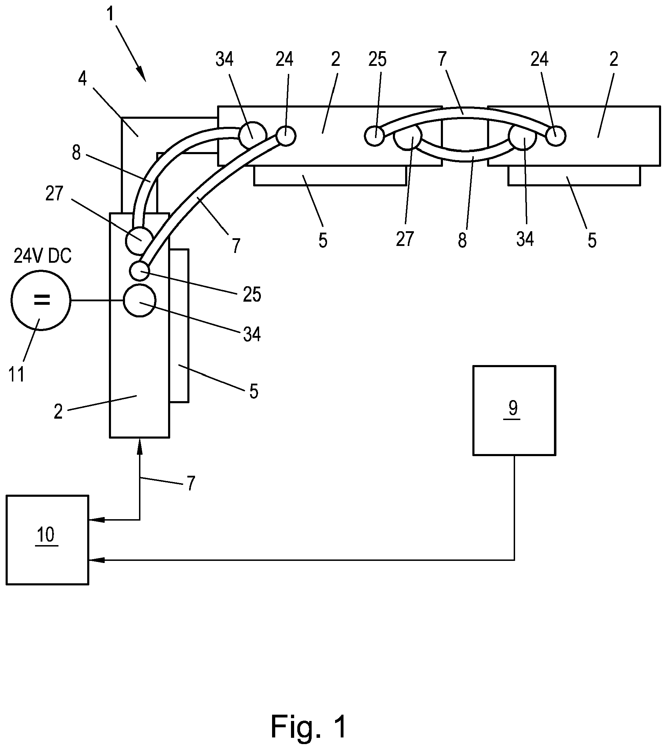

In Fig.1 ist eine erfindungsgemäße Beleuchtungsanordnung 1 für die industrielle Bildverarbeitung dargestellt. Die Beleuchtungsanordnung 1 besteht aus einer Anzahl von Beleuchtungseinheiten 2, wobei im Beispiel nach Fig.1 drei Beleuchtungseinheiten 2 vorgesehen sind. Die Beleuchtungsanordnung 1 umfasst zumindest eine Beleuchtungseinheit 2. Im Falle mehrerer Beleuchtungseinheiten 2 sind diese in Serie verbunden, wie nachfolgend noch im Detail ausgeführt wird. Jede Beleuchtungseinheit 2 hat ein Beleuchtungsmittel 5, beispielsweise in Form einer oder mehrerer Lichtquellen, wie beispielsweise LED.

Die einzelnen Beleuchtungseinheiten 2 können einzeln im Raum angeordnet sein, können aber auch über starre oder verstellbare Verbindungsteile 4 miteinander verbunden sein, wie in Fig.1 angedeutet. Durch die freie Anordnung im Raum, kann die Beleuchtungsanordnung 1 praktisch an jede Anwendung angepasst werden. Die Verbindungsteile 4 können verstellbar sein, um verschiedene Anordnungen und Ausrichtungen der Beleuchtungseinheiten 2 im Raum zu ermöglichen. Gleichfalls können auch verschiedene definierte Verbindungsteile 4 vorgesehen sein, um verschiedene Ausrichtungen und Anordnungen realisieren zu können. Damit wird eine individuelle Gestaltung der Beleuchtungsanordnung 1, eine optimale Beleuchtung je nach Anforderung, eine einfache Erweiterungsmöglichkeit und ein einfaches Umbauen der Beleuchtungsanordnung 1 ermöglicht.

Die Beleuchtungsanordnung 1 umfasst weiter eine übergeordnete Beleuchtungssteuereinheit 10. Die Beleuchtungssteuereinheit 10 ist über einen Datenbus mit einer Beleuchtungseinheit 2 verbunden. Dazu dient beispielsweise ein Buskabel 7, wobei aber auch eine drahtlose Verbindung denkbar ist. Die mit der Beleuchtungssteuereinheit 10 verbundene Beleuchtungseinheit 2 ist wieder über einen Datenbus mit einer nächsten Beleuchtungseinheit 2 verbunden usw., sodass sich eine serielle Verbindung zwischen der Beleuchtungssteuereinheit 10 und den Beleuchtungseinheiten 2 ergibt.

Zusätzlich können zumindest zwei, vorzugsweise alle, Beleuchtungseinheiten 2 auch mittels eines Versorgungskabels 8 miteinander in Serie verbunden sein, um eine Spannungsversorgung durch die einzelnen Beleuchtungseinheiten 2 durchzuschleifen. Dazu kann eine der Beleuchtungseinheiten 2 über eine entsprechende elektrische Schnittstelle an einen externen elektrischen Anschluss 11, beispielsweise ein 24V DC Anschluss, angeschlossen sein, über den dann die Spannungsversorgung der Beleuchtungseinheiten 2 erfolgt. Die Spannungsversorgung kann aber auch für jede Beleuchtungseinheit 2 separat erfolgen.

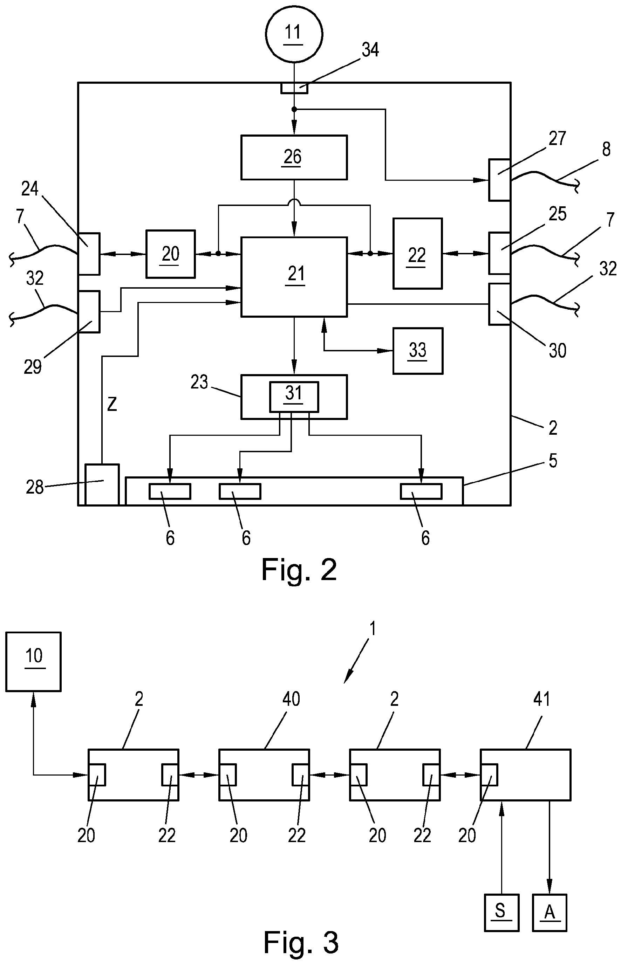

Eine Beleuchtungseinheit 2 in einer bevorzugten Ausgestaltung ist in Fig.2 dargestellt und wird nachfolgend mit Bezugnahme auf die Flg.2 beschrieben. Die Beleuchtungseinheit 2 umfasst eine erste Datenkommunikationsschnittstelle 20 zur Datenkommunikation über den Datenbus mit einem Busprotokoll. Dazu kann an der Beleuchtungseinheit 2 auch ein Stecker 24 vorgesehen sein, um die Datenkommunikationsschnittstelle 20 mit einem Datenbus, beispielsweise in Form eines Buskabels 7, zu verbinden. In der Beleuchtungseinheit 2 ist eine zweite Datenkommunikationsschnittstelle 22 angeordnet, die mit der ersten Datenkommunikationsschnittstelle 20 verbunden ist, um den Datenbus durchzuschleifen (Daisy-Chain). Die erste Datenkommunikationsschnittstelle 20 kann auch mit einer Recheneinheit 21 verbunden sein, die wiederum mit der zweiten Datenkommunikationsschnittstelle 22 verbunden sein kann, wenn die Recheneinheit 21 als Busumsetzer dient, wenn als beispielsweise der eingehende Datenbus bzw. das verwendete Busprotokoll und der ausgehende Datenbus bzw. das verwendete Busprotokoll unterschiedlich sind. Es gibt aber auch sogenannte Datenkommunikationsprotokolle mit Summenrahmen, in denen alle Busteilnehmer Daten schreiben oder aus denen alle Busteilnehmer Daten auslesen. Auch in diesem Fall kann die Datenkommunikation über die Recheneinheit 21 geführt werden. An die zweite Datenkommunikationsschnittstelle 22 kann über einen Stecker 25 zur Kommunikation mit einem Busprotokoll wiederum ein Datenbus, beispielsweise in Form eines Buskabels 7, angeschlossen werden. Über die erste Datenkommunikationsschnittstelle 20, bzw. den Stecker 24, und die zweite Datenkommunikationsschnittstelle 22, bzw. den Stecker 25, wird die Beleuchtungseinheit 2 mit der Beleuchtungssteuereinheit 10 oder der Recheneinheit 21 einer nachfolgenden Beleuchtungseinheit 2 verbunden. Die Stecker 24, 25 können auch als Schraubverbindung ausgeführt sein, was für den industriellen Einsatz vorteilhaft ist.

Zusätzlich kann in der Beleuchtungseinheit 2 natürlich auch eine Speichereinheit 33 vorgesehen sein, die auch mit der Recheneinheit 21 verbunden sein kann. Die Speichereinheit 33 kann natürlich auch ein Teil der Recheneinheit 21 sein. In der Speichereinheit 33 können beispielsweise Konfigurationsdaten oder sonstige für den Betrieb notwendige Daten gespeichert sein.

Die Recheneinheit 21, und gegebenenfalls auch die Speichereinheit 33, dient daher auch dazu über den Datenbus und die erste Datenkommunikationsschnittstelle 20 erhaltene Datenkommunikation, z.B. von einer Beleuchtungssteuereinheit 10 oder einer vorgeschalteten Beleuchtungseinheit 2, zu empfangen, auszuwerten und gegebenenfalls über die zweite Datenkommunikationsschnittstelle 22 an nachfolgende Beleuchtungseinheiten 2 durchzureichen, sofern eine weitere Einheit folgt und die Recheneinheit 21 als Busumsetzer dienen soll oder sofern das Datenkommunikationsprotokoll das erfordert. Umgekehrt kann auch Datenkommunikation über die zweite Datenkommunikationsschnittstelle 22 von einer Beleuchtungseinheit 2 empfangen werden und über die Recheneinheit 21 und die erste Datenkommunikationsschnittstelle 20 in Richtung der Beleuchtungssteuereinheit 10 gesendet werden, wenn die Recheneinheit 21 auch als Busumsetzer dienen soll oder sofern das Datenkommunikationsprotokoll das erfordert. Ansonsten können Daten auch direkt von der zweiten Datenkommunikationsschnittstelle 22 empfangen werden, an die erste Datenkommunikationsschnittstelle 20 durchgeschleift werden und beispielsweise an die Beleuchtungssteuereinheit 10 weitergeleitet werden.

Als Busprotokoll wird beispielsweise ein Ethernet basiertes Datenkommunikationsprotokoll verwendet, wie z.B. Ethernet Powerlink. Es kann aber natürlich auch ein proprietäres Datenkommunikationsprotokoll verwendet werden, wie z.B. X2X der Anmelderin. Selbstverständlich kann aber als Busprotokoll auch jedes andere, auch standardisierte, Datenkommunikationsprotokoll verwendet werden.

Die Beleuchtungseinheit 2 umfasst auch eine Spannungsversorgung 26, vorzugsweise eine 24V Gleichspannungsversorgung, wie in der industriellen Automatisierung üblich, um die Energieversorgung der Beleuchtungseinheit 2, insbesondere auch für das Beleuchtungsmittel 5, zur Verfügung zu stellen. Die Spannungsversorgung 26 kann über eine elektrische Schnittstelle 34, z.B. ein Steckkontakt, an einen externen elektrischen Anschluss 11, vorzugsweise ein 24V DC Anschluss, angeschlossen werden. Gleichfalls könnte aber auch ein Datenbus verwendet werden, der eine Stromversorgung zur Verfügung stellt, beispielsweise Ethernet Powerlink mit Stromversorgung (Power over Ethernet, PoE). In diesem Fall könnte die Spannungsversorgung 26 mit dem Stecker 24, 25 der ersten Datenkommunikationsschnittstelle 20 oder der zweiten Datenkommunikationsschnittstelle 22 verbunden sein. Die Beleuchtungseinheit 2 kann auch einen Versorgungsstecker 27 aufweisen, um die Spannungsversorgung 26 an angeschlossene Beleuchtungseinheiten 2 durchzureichen. Damit kann beispielsweise eine Beleuchtungseinheit 2 über den Versorgungsstecker 27 mit der elektrischen Schnittstelle 34 einer anderen Beleuchtungseinheit 2 verbunden sein. Dazu können auch Versorgungskabel 8 vorgesehen sein, um die Spannungsversorgung durch alle Beleuchtungseinheiten 2 durchzuschleifen. Wenn ein Datenbus mit Stromversorgung verwendet wird, wird der Versorgungsstecker 27 und die elektrische Schnittstelle 34 bevorzugt nicht verwendet, um Verkabelung einzusparen. Dann wird über die Datenkommunikationsschnittstellen 24, 25, die Versorgungsspannung an die Spannungsversorgung 26 weitergeleitet.

Weiter kann in der Beleuchtungseinheit 2 eine Leuchtensteuereinheit 23 vorgesehen sein, die mit der Recheneinheit 21 verbunden ist und von dieser angesteuert wird. Die Leuchtensteuereinheit 23 kann aber auch in die Recheneinheit 21 integriert sein, beispielsweise als Software, die auf der Recheneinheit 21 ausgeführt wird. Die Leuchtensteuereinheit 23 ist mit dem Beleuchtungsmittel 5 der Beleuchtungseinheit 2 verbunden bzw. mit den einzelnen Lichtquellen 6 des Beleuchtungsmittels 5. Grundsätzlich kann das Beleuchtungsmittel 5 eine Mehrzahl von einzelnen Lichtquellen 6 umfassen, die auch einzeln oder in definierten Gruppen von der Leuchtensteuereinheit 23 bzw. von der Recheneinheit 21 angesteuert werden können. Dabei können auch Lichtquellen 6 unterschiedlicher Typen eingesetzt werden, beispielsweise mit verschiedenen Lichtfarben bzw. Lichtspektren. In einer vorteilhaften Ausgestaltung werden als Lichtquellen 6 LEDs verwendet. Die Leuchtensteuereinheit 23 kann zum Ansteuern der Lichtquellen 6 eine Energieversorgung 31, z.B. eine Beleuchtungsspannungsversorgung oder Beleuchtungsstromversorgung, umfassen, die auch steuerbar ausgeführt sein kann. Im Fall von LEDs als Lichtquelle 6 umfasst die Leuchtensteuereinheit 23 als Energieversorgung 31 vorzugsweise eine steuerbare Konstantstromquelle pro LED oder jeweils für eine bestimmte Gruppe von LEDs. Über die Leuchtensteuereinheit 23 bzw. die Recheneinheit 21 kann durch entsprechendes Ansteuern der einzelnen Lichtquellen 6 oder der Gruppen von einzelnen Lichtquellen 6 vorteilhafterweise insbesondere die Lichtintensität, die Lichtfarbe, die Beleuchtungsdauer und/oder die Beleuchtungsrichtung des vom Beleuchtungsmittel 5 abgestrahlten Lichtes gesteuert werden.

In oder an der Beleuchtungseinheit 2 kann auch eine Anzahl von Messsensoren 28 angeordnet sein, um mindestens eine Zustandsgröße Z des vom Beleuchtungsmittel 5 abgegebenen Lichts und/oder der Beleuchtungseinheit 2 selbst zu erfassen. Eine solche Zustandsgröße Z kann beispielsweise die abgegebene Lichtintensität, die Lichtfarbe, die Temperatur in der Beleuchtungseinheit 2, die Umgebungstemperatur, die Umgebungslichtintensität, usw. sein. Die mindestens eine erfasste Zustandsgröße Z kann über die Recheneinheit 21 und die erste Datenkommunikationsschnittstelle 20 auch an die Beleuchtungssteuereinheit 10 gesendet werden.

Die Beleuchtungseinheit 2 wird mittels der Recheneinheit 21 geregelt. Dazu erhält die Beleuchtungseinheit 2 von der Beleuchtungssteuereinheit 10 Sollwerte für die gewünschte Beleuchtung, also beispielsweise einen Sollwert für die Lichtintensität und/oder die Lichtfarbe. Vorzugsweise wird die Lichtintensität, die Wellenlänge (Farbe bzw. Spektralbereich(e)), Beleuchtungsdauer, Beleuchtungsrichtung, usw. wobei auch gleichzeitig mehrere verschiedene Beleuchtungscharakteristiken geregelt werden können. Die Recheneinheit 21 regelt dann diese Sollwerte im laufenden Betrieb ein. Rückmeldung über den Istzustand der Beleuchtung erhält die Recheneinheit 21 von den Messsensoren 28 in Form der erfassten Zustandsgrößen Z. Es wird damit eine geschlossene Regelschleife ausgebildet, die es der Recheneinheit 21 ermöglicht, die geforderte Abstrahlcharakteristik der Beleuchtung einzustellen und im laufenden Betrieb aufrecht zu erhalten. Die Recheneinheit 21 berechnet dabei in regelmäßigen zeitlichen Abständen (Abtastrate der Regelung) aus den vorgegebenen Sollwerten und den mit den Messsensoren 28 erfassten Zustandsgrößen Z Stellgrößen für die einzelnen Lichtquellen 6 und/oder für eine Gruppe von Lichtquellen 6, die dann von der Leuchtensteuereinheit 23 umgesetzt werden, beispielsweise indem einzelne Lichtquellen 6 oder Gruppen von Lichtquellen 6 mit einem entsprechenden Strom oder Spannung beaufschlagt werden, um den vergebenen Sollwert einzustellen. Die vorgegebenen Sollwerte werden dabei vorzugsweise in der Speichereinheit 33 gespeichert. In der Recheneinheit 21 kann dazu natürlich auch ein geeigneter Regler zum Regeln der Beleuchtung bzw. einer Lichtquelle 6 bzw. einer Gruppe von Lichtquellen 6 implementiert sein.

Die mit den Messsensoren 28 erfassten Zustandsgrößen Z der Beleuchtungseinheit 2 können auch an die Beleuchtungssteuereinheit 10 gesendet werden. Die Beleuchtungssteuereinheit 10 kennt damit den aktuellen Zustand jeder Beleuchtungseinheit 2 und ist damit in der Lage, den Betrieb der Beleuchtungsanordnung 1 zu überwachen. Beispielsweise können in der Beleuchtungssteuereinheit 10 zu einer Beleuchtungseinheit 2 zulässige Grenzwerte für bestimmte Zustandsgrößen Z gespeichert sein, deren Einhaltung von der Beleuchtungssteuereinheit 10 überprüft wird. Wird ein solcher Grenzwert, beispielsweise ein maximaler Strom einer Lichtquelle 6, überschritten, kann die Beleuchtungseinheit 2 über den Datenbus zu einer bestimmten Handlung angewiesen werden. Beispielsweise kann die Beleuchtungseinheit 2 angewiesen werden eine bestimmte Lichtquelle 6 zu deaktivieren. Durch die gleichzeitige Regelung aller Lichtquellen 6 kann das ausgeglichen werden. Die Beleuchtungssteuereinheit 10 kann damit aber auch einen Austausch oder eine Wartung einer Beleuchtungseinheit 2 veranlassen.

Eine Beleuchtungseinheit 2 hat vorzugsweise eine eindeutige Kennung, beispielsweise über ein hardwaremäßiges Widerstandsarray oder in der Speichereinheit 33 hinterlegt. Eine Beleuchtungseinheit 2 übermittelt in jeder Nachricht an die Beleuchtungssteuereinheit 10 die Kennung mit. Über die Kennung kann die Beleuchtungssteuereinheit 10 damit jede Beleuchtungseinheit 2 eindeutig identifizieren und erhaltene Zustandsgrößen Z oder Statusinformationen zuordnen. Die Beleuchtungssteuereinheit 10 kann damit auch fest hinterlegte Parameter und Eigenschaften aufrufen und/oder z.B. Grenzwerte für die Ansteuerung festlegen.

Weiter kann an der Beleuchtungseinheit 2 ein Triggereingang 29 vorgesehen sein, der zum zeitlichen Synchronisieren der einzelnen Beleuchtungseinheiten 2 verwendet werden kann.

Ein digitales oder analoges Triggersignal am Triggereingang 29 kann von der Recheneinheit 21 ausgewertet werden und zum Ansteuern, beispielsweise Ein- oder Ausschalten, des Beleuchtungsmittels 5 verwendet werden. Das Triggersignal kann auch über einen Triggerausgang 30 ausgegeben werden, sodass das Triggersignal auch an nachfolgende, angeschlossene Beleuchtungseinheiten 2 durchgereicht werden kann. Auch dazu kann ein Triggerkabel 32 vorgesehen sein. Anstelle eines eigenen Triggereinganges 29 kann auch eine Triggernachricht über den Datenbus empfangen und in der Recheneinheit 21 ausgewertet werden.

Gleichfalls kann anstelle der Ausgabe eines Triggersignals an einem Triggerausgang 30 eine Triggernachricht über die Datenkommunikationsschnittstelle 22 an nachfolgende, angeschlossene Beleuchtungseinheiten 2 durchgereicht werden. Im Falle von Triggernachrichten über einen Datenbus kann natürlich auf einen separaten Triggereingang 29 und/oder einen separaten Triggerausgang 30 auch verzichtet werden oder diese müssen nicht verkabelt sein.

Die Beleuchtungseinheit 2 samt Beleuchtungsmittel 5 ist vorzugsweise für den industriellen Einsatz, auch in rauer industrieller Umgebung, in einem geschlossenen Gehäuse angeordnet, das auch wasserdicht und/oder staubdicht ausgeführt sein kann.

Selbstverständlich können in der Speichereinheit 33 auch Betriebsdaten der Beleuchtungseinheit 2 gespeichert werden, um z.B. im Fehlerfall Rückschlüsse auf eine Fehlerursache zu erhalten. Beispielsweise könnten die Betriebsstunden mitgezählt und gespeichert werden, ebenso könnten Werte einer Zustandsgröße Z oder auch der zeitliche Verlauf einer Zustandsgröße Z gespeichert werden, beispielsweise um später ausgewertet werden zu können. Der zeitliche Verlauf einer Zustandsgröße Z könnte in der Recheneinheit 21 auch für die Steuerung der Beleuchtungsmittel 5 verwendet werden.

Für die industrielle Beleuchtung wird zuerst ermittelt wie viele Beleuchtungseinheiten 2 für die benötigte Beleuchtung benötigt werden und wie diese im Raum angeordnet werden müssen. Den beteiligten Beleuchtungseinheiten 2 werden dann von der Beleuchtungssteuereinheit 10 die Sollwerte für die Realisierung der Beleuchtungsaufgabe übermittelt. Die Beleuchtungseinheiten 2 realisieren die vorgegebenen Sollwerte dann autonom und unabhängig von der Beleuchtungssteuereinheit 10. Von den vorhandenen Beleuchtungseinheiten 2 können dabei Statusinformationen, wie beispielsweise erfasste Zustandsgrößen Z, an die Beleuchtungseinheit 2 mit Statusnachrichten des Busprotokolls übertragen werden. Die Beleuchtungssteuereinheit 10 kann aber auch selbst weitere Messwerte von Messsensoren 9 erfassen (Fig.1) und zum Steuern der Beleuchtungsanordnung 1 auswerten. Beispielsweise kann die Lichtintensität im beleuchteten Bereich erfasst werden. Die Beleuchtungssteuereinheit 10 kann auch ein Triggersignal senden oder Triggernachrichten über den Datenbus an die Beleuchtungseinheiten 2 senden.

Es ist aber auch möglich, zwischen zwei benachbarten Beleuchtungseinheiten 2 oder an eine Beleuchtungseinheit 2 ein anderes Busgerät 40, 41 zu schalten, wie anhand von Fig.3 erläutert wird. Eine zweite Datenkommunikationsschnittstelle 22 einer Beleuchtungseinheit 2 kann beispielsweise an eine erste Datenkommunikationsschnittstelle 20 eines Busgeräts 40, 41 angeschlossen werden, dessen zweite Datenkommunikationsschnittstelle 22 wiederum mit einem anderen Busgerät oder mit einer Beleuchtungseinheit 2 verbunden werden kann. Damit ist es auf einfach Weise möglich, die Beleuchtungsanordnung 1 durch weitere Funktionalitäten zu erweitern. Beispielsweise könnte auf diese Weise eine Kamera der industriellen Bildverarbeitung als Busgerät 40 eingebunden werden. Die Kamera könnte damit über denselben Datenbus von der Beleuchtungssteuereinheit 10 überwacht und/oder gesteuert werden. Ein Busgerät 41 könnte auch als I/O (Ein-/Ausgabe) Schnittstelle dienen, über die Sensordaten von Sensoren S von der Beleuchtungssteuereinheit 10 erfasst oder Aktuatoren A, z.B. eine Verstellung eines Verbindungsteils 4, von der Beleuchtungssteuereinheit 10 angesteuert werden können. Zwischen zwei Beleuchtungseinheiten 2 können dabei natürlich auch mehrere solche weiteren Busgeräte geschaltet sein. Auf diese Weise kann die volle Integration der Beleuchtungsanordnung 1 in eine Automatisierung einer Anlage realisiert werden.

## Patentansprüche

1. Beleuchtungsanordnung für die industrielle Bildverarbeitung mit einer Beleuchtungssteuereinheit (10) und zumindest einer Beleuchtungseinheit (2) mit einer ersten Datenkommunikationsschnittstelle (20) zum Anschließen eines Datenbusses, wobei die Beleuchtungssteuereinheit (10) über den Datenbus mit der Beleuchtungseinheit (2) verbunden ist und in der Beleuchtungseinheit (2) ein Beleuchtungsmittel (5) mit einer Anzahl von Lichtquellen (6) angeordnet ist, wobei die Beleuchtungssteuereinheit (10) dazu ausgebildet ist, einen Sollwert der Beleuchtung über den Datenbus an die Beleuchtungseinheit (2) zu senden, wobei in der Beleuchtungseinheit (2) eine zweite Datenkommunikationsschnittstelle (22) zum Anschließen des Datenbusses angeordnet ist, und wobei in der Beleuchtungseinheit (2) zumindest ein Messsensor (28) zur Erfassung zumindest einer Zustandsgröße (Z) der Beleuchtungseinheit (2) und/oder der Umgebung der Beleuchtungseinheit (2), eine Recheneinheit (21) und eine Leuchtensteuereinheit (23) angeordnet sind,
**dadurch gekennzeichnet, dass**
die zweite Datenkommunikationsschnittstelle (22) mit der ersten Datenkommunikationsschnittstelle (21) direkt verbunden ist, um den Datenbus durchzuschleifen, dass die Recheneinheit (21) dazu ausgebildet ist, aus dem vorgegebenen Sollwert und dem aktuellen Wert der zumindest einen Zustandsgröße (Z) eine Stellgröße für zumindest eine der Lichtquellen (6) des Beleuchtungsmittels (5) zu berechnen und dass die Leuchtensteuereinheit (23) dazu ausgebildet ist, die zumindest eine Lichtquelle (6) des Beleuchtungsmittels (5) mit der berechneten Stellgröße anzusteuern.

2. Beleuchtungsanordnung nach Anspruch 1, **dadurch gekennzeichnet, dass** die Recheneinheit (21) dazu ausgebildet ist, eine Stellgröße für eine aus mehreren Lichtquellen (6) bestehenden Gruppe von Lichtquellen (6) zu berechnen und die Leuchtensteuereinheit (23) dazu ausgebildet ist, die Gruppe der Lichtquellen (6) mit der berechneten Stellgröße anzusteuern.

3. Beleuchtungsanordnung nach Anspruch 1, **dadurch gekennzeichnet, dass** die Recheneinheit (21) dazu ausgebildet ist, für verschiedene Lichtquellen (6) oder Gruppen von Lichtquellen (6) verschiedene Stellgrößen zu berechnen und die Leuchtensteuereinheit (23) dazu ausgebildet ist, die verschiedenen Lichtquellen (6) oder verschiedenen Gruppen von Lichtquellen (6) mit den berechneten verschiedenen Stellgrößen anzusteuern.

4. Beleuchtungsanordnung nach einem der Ansprüche 1 bis 3, **dadurch gekennzeichnet, dass** in der Beleuchtungseinheit (6) eine Spannungsversorgung (26) angeordnet ist, die zur Spannungsversorgung der Beleuchtungseinheit (2) mit einem externen elektrischen Anschluss (34) und/oder einem Datenbus mit Stromversorgung verbindbar ist.

5. Beleuchtungsanordnung nach einem der Ansprüche 1 bis 4, **dadurch gekennzeichnet, dass** die Beleuchtungseinheit (2) dazu ausgebildet ist, die erfasste Zustandsgröße (Z) über den Datenbus an die Beleuchtungssteuereinheit (10) zu senden.

6. Beleuchtungsanordnung nach Anspruch 5, **dadurch gekennzeichnet, dass** der Beleuchtungseinheit (2) eine eindeutige Kennung zugeordnet ist und die Beleuchtungseinheit (2) dazu ausgebildet ist, die erfasste Zustandsgröße (Z) mit der eindeutigen Kennung über den Datenbus an die Beleuchtungssteuereinheit (10) zu senden.

7. Beleuchtungsanordnung nach einem der Ansprüche 1 bis 6, **dadurch gekennzeichnet, dass** an der Beleuchtungseinheit (2) ein mit der Recheneinheit (21) verbundener Triggereingang (29) vorgesehen ist, um der Recheneinheit (21) ein Triggersignal zum Ein- und/oder Ausschalten des Beleuchtungsmittels (5), einer Lichtquelle (6) oder einer Gruppe von Lichtquellen (6) zuzuführen.

8. Beleuchtungsanordnung nach einem der Ansprüche 1 bis 7, **dadurch gekennzeichnet, dass** in der Beleuchtungseinheit (2) eine Speichereinheit (33) angeordnet ist, die dazu ausgebildet ist, Betriebsdaten der Beleuchtungseinheit (2) und/oder Zustandsgrößen (Z) zu speichern.

9. Beleuchtungsanordnung nach einem der Ansprüche 1 bis 8, **dadurch gekennzeichnet, dass** die Beleuchtungsanordnung (1) mehrere Beleuchtungseinheiten (2) umfasst, wobei die einzelnen Beleuchtungseinheiten (2) über deren erste Datenkommunikationsschnittstellen (20) und zweite Datenkommunikationsschnittstellen (22) und den Datenbus in Serie miteinander verbunden sind.

10. Beleuchtungsanordnung nach Anspruch 9, **dadurch gekennzeichnet, dass** die erste Datenkommunikationsschnittstelle (20) und die zweite Datenkommunikationsschnittstelle (22) über die Recheneinheit (21) miteinander verbunden sind.

11. Beleuchtungsanordnung nach Anspruch 9 oder 10, **dadurch gekennzeichnet, dass** eine der Beleuchtungseinheiten dazu ausgebildet ist, einen von der Beleuchtungssteuereinheit (10) erhaltenen Sollwert der Beleuchtung über den Datenbus an eine nachfolgende, von der Beleuchtungssteuereinheit (10) weiter entfernte Beleuchtungseinheit (2) durchzuschleifen.

12. Beleuchtungsanordnung nach einem der Ansprüche 9 bis 11, **dadurch gekennzeichnet, dass** zumindest zwei der Beleuchtungseinheiten (2) an einem starren oder verstellbaren Verbindungsteil (4) angeordnet sind.

13. Beleuchtungsanordnung nach einem der Ansprüche 9 bis 11, **dadurch gekennzeichnet, dass** zumindest zwei der Beleuchtungseinheiten (2) zur Spannungsversorgung mit einem Versorgungskabel (8) und/oder einem Datenbus mit Stromversorgung verbunden sind.

14. Beleuchtungsanordnung nach einem der Ansprüche 9 bis 11, **dadurch gekennzeichnet, dass** zumindest zwei der Beleuchtungseinheiten (2) über ein Triggerkabel (32) miteinander verbunden sind, um ein Triggersignal von der einen Beleuchtungseinheit (2) an die andere Beleuchtungseinheit (2) durchzuschleifen.

15. Beleuchtungsanordnung nach einem der Ansprüche 9 bis 11, **dadurch gekennzeichnet, dass** zwischen zwei der Beleuchtungseinheiten (2) und/oder an die von der Beleuchtungssteuereinheit am weitesten entfernte Beleuchtungseinheit (2) ein weiteres Busgerät (40, 41) in den Datenbus geschaltet ist.

16. Verfahren zum Steuern einer Beleuchtung einer industriellen Bildverarbeitung, wobei zumindest eine Beleuchtungseinheit (2) mit einem Beleuchtungsmittel (5) aus einer Anzahl von Lichtquellen (6) über eine erste Datenkommunikationsschnittstelle (20) von einer Beleuchtungssteuereinheit (10) über einen Datenbus einen Sollwert der Beleuchtung erhält, wobei die Beleuchtungseinheit (2) eine Zustandsgröße (Z) der Beleuchtungseinheit (2) und/oder der Umgebung der Beleuchtungseinheit (2) erfasst,
**dadurch gekennzeichnet, dass**
die Beleuchtungseinheit (2) den Sollwert in einer geschlossenen Regelschleife eigenständig und unabhängig von der Beleuchtungssteuereinheit (10) einregelt, indem in der Beleuchtungseinheit (2) eine Stellgröße für zumindest eine Lichtquelle (6) berechnet und an der zumindest einen Lichtquelle (6) eingestellt wird und dass der Sollwert der Beleuchtung von der ersten Datenkommunikationsschnittstelle (20) an eine in der Beleuchtungseinheit (2) angeordnete und mit der ersten Datenkommunikationsschnittstelle (20) direkt verbundene zweite Datenkommunikationsschnittstelle (22) durchgeschleift wird.

17. Verfahren nach Anspruch 16, **dadurch gekennzeichnet, dass** mit der berechneten Stellgröße eine Gruppe von Lichtquellen (6) geregelt wird.

18. Verfahren nach Anspruch 16 oder 17, **dadurch gekennzeichnet, dass** die Beleuchtungseinheit (2) die erfasste Zustandsgröße (Z), vorzugsweise mit einer eindeutigen Kennung der Beleuchtungseinheit (2), über den Datenbus an die Beleuchtungssteuereinheit (10) sendet.

19. Verfahren nach einem der Ansprüche 16 bis 18, **dadurch gekennzeichnet, dass** die Beleuchtungseinheit (2) ein Triggersignal über einen Triggereingang (29) oder eine Triggernachricht über den Datenbus erhält und damit das Ein- und/oder Ausschalten des Beleuchtungsmittels (5), einer Lichtquelle (6) oder eine Gruppe von Lichtquellen (6) steuert.

20. Verfahren nach Anspruch 19, **dadurch gekennzeichnet, dass** die Beleuchtungseinheit (2) das Triggersignal über einen Triggerausgang (30) oder die Triggernachricht über den Datenbus an eine nachgeschaltete Beleuchtungseinheit (2) durchschleift.

## Claims

1. Lighting arrangement for industrial image processing, having a lighting control unit (10) and at least one lighting unit (2) with a first data communication interface (20) for connecting a data bus, wherein the lighting control unit (10) is connected to the lighting unit (2) by means of the data bus, and a lighting means (5) with a number of light sources (6) is arranged in the lighting unit (2), wherein the lighting control unit (10) is designed to transmit a set value of the lighting via the data bus to the lighting unit (2), wherein a second data communication interface (22) for connecting a data bus is arranged in the lighting unit (2), and wherein at least one measuring sensor (28) for capturing at least one state variable (Z) of the lighting unit (2) and/or the surroundings of the lighting unit (2), a processing unit (21) and a lamp control unit (23) are arranged in the lighting unit (2), **characterized in that,** in order to loop through the data bus, the second data communication interface (22) is directly connected to the first data communication interface (20), that the processing unit (21) is designed to calculate a control variable for at least one light source (6) of the lighting means (5) from the predefined set value and the current value of the at least one state variable (Z), **and that** the lamp control unit (23) is designed to control the at least one light source (6) of the lighting means (5) with the calculated control variable.

2. Lighting arrangement according to claim 1, **characterized in that** the processing unit (21) is designed to calculate a control variable for a group of light sources (6) which consists of a plurality of light sources (6), and the lamp control unit (23) controls the group of light sources (6) with the calculated control variable.

3. Lighting arrangement according to claim 1, **characterized in that** the processing unit (21) is designed to calculate different control variables for different light sources (6) or groups of light sources (6), and the lamp control unit (23) is designed to control the different light sources (6) or different groups of light sources (6) with the calculated different control variables.

4. Lighting arrangement according to one of the claims 1 to 3, **characterized in that** a voltage supply (26) is arranged in the lighting unit (6) which is connectable to an external electrical connection (34) and/or a data bus with power supply for supplying voltage for the lighting unit (2).

5. Lighting arrangement according to one of the claims 1 to 4, **characterized in that** the lighting unit (2) is designed to send the captured state variable (Z) to the lighting control unit (10) by means of the data bus.

6. Lighting arrangement according to claim 5, **characterized in that** a unique identifier is assigned to the lighting unit (2), and the lighting unit (2) is designed to send the captured state variable (Z) with the unique identifier to the lighting control unit (10) by means of the data bus.

7. Lighting arrangement according to one of the claims 1 to 6, **characterized in that** a trigger input (29), which is connected to the processing unit (21), is provided on the lighting unit (2) in order to feed to the processing unit (21) a trigger signal for activation and/or deactivation of the lighting means (5), a light source (6), or a group of light sources (6).

8. Lighting arrangement according to one of the claims 1 to 7, **characterized in that** a memory unit (33) is arranged in the lighting unit (2), which is designed to store operating data of the lighting unit (2) and/or state variables (Z) .

9. Lighting arrangement according to one of the claims 1 to 8, **characterized in that** the lighting arrangement (1) comprises a plurality of lighting units (2), wherein the individual lighting units (2) are series-connected to one another by means of their first data communication interfaces (20) and second data communication interfaces (22) and the data bus.

10. Lighting arrangement according to claim 9, **characterized in that** the first data communication interface (20) and the second data communication interface (22) are connected to one another by means of the processing unit (21).

11. Lighting arrangement according to claim 9 or 10, **characterized in that** one of the lighting units (2) is designed to loop a set value of the lighting, which was received from the lighting control unit (10), through to a next lighting unit (2), which is further away from the lighting control unit (10), by means of the data bus.

12. Lighting arrangement according to one of the claims 9 to 11, **characterized in that** at least two of the lighting units (2) are arranged on a rigid or adjustable connecting part (4).

13. Lighting arrangement according to one of the claims 9 to 11, **characterized in that** for current supply, at least two of the lighting units (2) are connected to a supply cable (8) and/or a data bus with power supply.

14. Lighting arrangement according to one of the claims 9 to 11, **characterized in that** at least two of the lighting units (2) are connected to one another by means of a trigger cable (32) in order to loop a trigger signal from one lighting unit (2) through to the other lighting unit (2).

15. Lighting arrangement according to one of the claims 9 to 11, **characterized in that** a further bus device (40, 41) is connected to the data bus between two of the lighting units (2) and/or to the lighting unit (2) which is furthest away from the lighting control unit.

16. Method for controlling a lighting of an industrial image processing, wherein at least one lighting unit (2), having a lighting means (5) comprising a number of light sources (6), receives a set value of the lighting via a data bus from a lighting control unit (10), wherein the lighting unit (2) captures a state variable (Z) of the lighting unit (2) and/or the surroundings of the lighting unit (2), **characterized in that** the lighting unit (2) adjusts the set value in a closed control loop separately and independently from the lighting control unit (10) **in that** a control variable for at least one light source (6) is calculated in the lighting unit (2) and adjusted at the at least one light source (6) and that the set value of the lighting is looped through from the first data communication interface (20) to the second data communication interface (22), arranged in the lighting unit (2) and directly connected to the first data communication interface (20).

17. Method according to claim 16, **characterized in that** a group of light sources (6) is controlled with the calculated control variable.

18. Method according to claim 16 or 17, **characterized in that** the lighting unit (2) sends the captured state variable (Z), preferably with a unique identifier of the lighting unit (2), via the data bus to the lighting control unit (10).

19. Method according to one of the claims 16 to 18, **characterized in that** the lighting unit (2) receives a trigger signal via a trigger input (29) or a trigger message via the data bus and controls the activation and/or deactivation of the lighting means (5), a light source (6), or a group of light sources (6) with said trigger signal or trigger message.

20. Method according to claim 19, **characterized in that** the lighting unit (2) loops the trigger signal via a trigger output (30) or the trigger message via the data bus through to a downstream lighting unit (2).

## Revendications

1. Dispositif d'éclairage pour le traitement industriel d'images, comportant une unité de commande d'éclairage (10) et au moins une unité d'éclairage (2) ayant une première interface de communication de données (20) pour connecter un bus de données, dans lequel l'unité de commande d'éclairage (10) est connectée à l'unité d'éclairage (2) par l'intermédiaire du bus de données, et un moyen d'éclairage (5) comportant un certain nombre de sources de lumière (6) est disposé dans l'unité d'éclairage (2), dans lequel l'unité de commande d'éclairage (10) est conçue pour envoyer une valeur de consigne de l'éclairage à l'unité d'éclairage (2) par l'intermédiaire du bus de données, dans lequel une seconde interface de communication de données (22) est disposée, dans l'unité d'éclairage (2), pour connecter le bus de données, et au moins un capteur de mesure (28) permettant de détecter au moins une grandeur d'état (Z) de l'unité d'éclairage (2) et/ou de l'environnement de l'unité d'éclairage (2), une unité de calcul (21) et une unité de commande de lumière (23) étant disposés dans l'unité d'éclairage (2),
**caractérisé en ce que**
la seconde interface de communication de données (22) est directement reliée à la première interface de communication de données (21) pour boucler le bus de données, **en ce que** l'unité de calcul (21) est conçue pour calculer, à partir de la valeur de consigne prédéterminée et de la valeur courante de l'au moins une grandeur d'état (Z), une grandeur de réglage pour au moins l'une des sources de lumière (6) du moyen d'éclairage (5), et **en ce que** l'unité de commande de lumière (23) est conçue pour commander l'au moins une source de lumière (6) du moyen d'éclairage (5) en utilisant la grandeur de réglage calculée.

2. Dispositif d'éclairage selon la revendication 1, **caractérisé en ce que** l'unité de calcul (21) est conçue pour calculer une grandeur de réglage pour un groupe de sources de lumière (6) constitué d'une pluralité de sources de lumière (6) et l'unité de commande de lumière (23) est conçue pour commander le groupe de sources de lumière (6) en utilisant la grandeur de réglage calculée.

3. Dispositif d'éclairage selon la revendication 1, **caractérisé en ce que** l'unité de calcul (21) est conçue pour calculer différentes grandeurs de réglage pour différentes sources de lumière (6) ou différents groupes de sources de lumière (6), et l'unité de commande de lumière (23) est conçue pour commander les différentes sources de lumière (6) ou les différents groupes de sources de lumière (6) en utilisant les différentes grandeurs de réglage calculées.

4. Dispositif d'éclairage selon l'une des revendications 1 à 3, **caractérisé en ce qu'**une alimentation en courant (26) est disposée dans l'unité d'éclairage (6), laquelle peut être reliée à l'alimentation en courant de l'unité d'éclairage (2) par l'intermédiaire d'une connexion électrique externe (34) et/ou par l'intermédiaire d'un bus de données comportant une alimentation en courant.

5. Dispositif d'éclairage selon l'une des revendications 1 à 4, **caractérisé en ce que** l'unité d'éclairage (2) est conçue pour envoyer la grandeur d'état (Z) détectée à l'unité de commande d'éclairage (10) par l'intermédiaire du bus de données.

6. Dispositif d'éclairage selon la revendication 5, **caractérisé en ce qu'**un identifiant unique est associé à l'unité d'éclairage (2), et **en ce que** l'unité d'éclairage (2) est conçue pour envoyer la grandeur d'état (Z) détectée, en utilisant l'identifiant unique, à l'unité de commande d'éclairage (10) par l'intermédiaire du bus de données.

7. Dispositif d'éclairage selon l'une des revendications 1 à 6, **caractérisé en ce qu'**une entrée de déclenchement (29) reliée à l'unité de calcul (21) est prévue au niveau de l'unité d'éclairage (2), pour acheminer à l'unité de calcul (21) un signal de déclenchement visant à activer et/ou à désactiver le moyen d'éclairage (5), une source de lumière (6) ou un groupe de sources de lumière (6).

8. Dispositif d'éclairage selon l'une des revendications 1 à 7, **caractérisé en ce qu'**une unité de mémoire (33) est disposée dans l'unité d'éclairage (2), laquelle unité de mémoire est conçue pour mémoriser des données de fonctionnement de l'unité d'éclairage (2) et/ou des grandeurs d'état (Z).

9. Dispositif d'éclairage selon l'une des revendications 1 à 8, **caractérisé en ce que** le dispositif d'éclairage (1) comprend une pluralité d'unités d'éclairage (2), les unités d'éclairage (2) individuelles étant interconnectées en série par l'intermédiaire de leurs premières interfaces de communication de données (20) et de leurs secondes interfaces de communication de données (22) et du bus de données.

10. Dispositif d'éclairage selon la revendication 9, **caractérisé en ce que** la première interface de communication de données (20) et la seconde interface de communication de données (22) sont interconnectées par l'intermédiaire de l'unité de calcul (21).

11. Dispositif d'éclairage selon la revendication 9 ou 10, **caractérisé en ce que** l'une des unités d'éclairage est conçue pour boucler une valeur de consigne obtenue de l'unité de commande d'éclairage (10) par l'intermédiaire du bus de données, sur une unité d'éclairage (2) suivante éloignée de l'unité de commande d'éclairage (10).

12. Dispositif d'éclairage selon l'une des revendications 9 à 11, **caractérisé en ce qu'**au moins deux des unités d'éclairage (2) sont disposées sur un connecteur (4) rigide ou réglable.

13. Dispositif d'éclairage selon l'une des revendications 9 à 11, **caractérisé en ce qu'**au moins deux des unités d'éclairage (2) sont reliées à un câble d'alimentation (8) et/ou à un bus de données comportant une alimentation en courant.

14. Dispositif d'éclairage selon l'une des revendications 9 à 11, **caractérisé en ce qu'**au moins deux des unités d'éclairage (2) sont interconnectées par l'intermédiaire d'un câble de déclenchement (32) pour boucler un signal de déclenchement de l'une unité d'éclairage (2) sur l'autre unité d'éclairage (2).

15. Dispositif d'éclairage selon l'une des revendications 9 à 11, **caractérisé en ce qu'**un autre dispositif de bus (40, 41) est connecté dans le bus de données entre deux des unités d'éclairage (2) et/ou au niveau de l'unité d'éclairage (2) la plus éloignée de l'unité de commande d'éclairage.

16. Procédé de commande de l'éclairage d'un traitement industriel d'images, dans lequel au moins une unité d'éclairage (2) comportant un moyen d'éclairage (5) reçoit une valeur de consigne de l'éclairage à partir d'un certain nombre de sources de lumière (6), par l'intermédiaire d'une première interface de communication de données (20) d'une unité de commande d'éclairage (10) par l'intermédiaire d'un bus de données, dans lequel l'unité d'éclairage (2) détecte une grandeur d'état (Z) de l'unité d'éclairage (2) et/ou de l'environnement de l'unité d'éclairage (2), **caractérisé en ce que** l'unité d'éclairage (2) règle la valeur de consigne de manière autonome et indépendamment de l'unité de commande d'éclairage (10) dans une boucle de régulation fermée, en calculant une grandeur de réglage pour au moins une source de lumière (6) et en réglant la grandeur de réglage sur l'au moins une source de lumière (6) dans l'unité d'éclairage (2), et **en ce que** la valeur de consigne de l'éclairage est bouclée par la première interface de communication de données (20) sur une seconde interface de communication de données (22) disposée dans l'unité d'éclairage (2) et reliée directement à la première interface de communication de données (20).

17. Procédé selon la revendication 16, **caractérisé en ce qu'**un groupe de sources de lumière (6) est régulé en utilisant la grandeur de réglage calculée.

18. Procédé selon la revendication 16 ou 17, **caractérisé en ce que** l'unité d'éclairage (2) envoie la grandeur d'état (Z) détectée à l'unité de commande d'éclairage (10) par l'intermédiaire du bus de données, de préférence en utilisant un identifiant unique de l'unité d'éclairage (2).

19. Procédé selon l'une quelconque des revendications 16 à 18, **caractérisé en ce que** l'unité d'éclairage (2) reçoit un signal de déclenchement par une entrée de déclenchement (29) ou un message de déclenchement par l'intermédiaire du bus de données, et commande ainsi l'activation et/ou la désactivation des moyens d'éclairage (5), d'une source de lumière (6) ou d'un groupe de sources de lumière (6).

20. Procédé selon la revendication 19, **caractérisé en ce que** l'unité d'éclairage (2) boucle le signal de déclenchement par l'intermédiaire d'une sortie de déclenchement (30) ou le message de déclenchement par l'intermédiaire du bus de données sur une unité d'éclairage (2) en aval.
